Europäisches Patentamt

European Patent Office

Office européen des brevets

(11) Veröffentlichungsnummer: **0 020 284**
**B1**

## EUROPÄISCHE PATENTSCHRIFT

(45) Veröffentlichungstag der Patentschrift:
15.09.82

(51) Int. Cl.³: **F 16 F 15/12**

(21) Anmeldenummer: 80710011.0

(22) Anmeldetag: 07.05.80

(54) Schwingungsabsorber für Resonanzschwingungen rotierender Körper.

(30) Priorität: 02.06.79 DE 2922585

(43) Veröffentlichungstag der Anmeldung:
10.12.80 Patentblatt 80/25

(45) Bekanntmachung des Hinweises auf die Patenterteilung:
15.09.82 Patentblatt 82/37

(84) Benannte Vertragsstaaten:
AT BE CH DE FR GB IT LI NL SE

(56) Entgegenhaltungen:
DE-A-1 475 062
DE-A-1 605 584
DE-A-2 110 257
DE-A-2 720 333
DE-A-2 725 177
DE-A-2 750 743
DE-A-2 810 568
FR-A-2 423 687

FR-A-2 433 136
NL-A-7 402 387
US-A-2 270 902
US-A-3 327 812
US-A-3 601 228
ETR — Eisenbahntechnische Rundschau, Heft 4/1978, S. 229—232

(73) Patentinhaber: Krupp Stahl Aktiengesellschaft,
D-4630 Bochum (DE)

(72) Erfinder: Raquet, Erwin, Dr.rer.nat., Rüsbergstrasse 15,
D-5810 Witten 3 (DE)

(74) Vertreter: Patentanwältsburo Cohausz & Florack,
Schumannstrasse 97, D-4000 Düsseldorf 1 (DE)

## Schwingungsabsorber für Resonanzschwingungen rotierender Körper

Die Erfindung betrifft einen Schwingungsabsorber für Resonanzschwingungen rotierender Körper, insbesondere Schienenräder, bestehend aus mehreren, die Masse bildenden oder tragenden, voneinander durch Zwischenlagen aus Dämpfungsmaterial getrennten, schwingungsfähigen Platten, die an mindestens einer Stelle starr mit dem rotierenden Körper verbunden und im übrigen Bereich über eine Zwischenlage aus Dämpfungsmaterial großflächig an dem rotierenden Körper angekoppelt sind.

Solche Schwingungsabsorber für Resonanzschwingungen von Schienenträgern sind bekannt (Sonderdruck aus »ETR-Eisenbahntechnische Rundschau«, Heft 4/1978). Solche Schwingungsabsorber dienen dazu, die am stärksten die Gebrauchseigenschaften beeinträchtigenden Schwingungen, das sind bei Schienenrädern die für das Rollgeräusch und für das Kreischgeräusch verantwortlichen Schwingungen, zu dämpfen. Zu diesem Zweck sind die einzelnen Platten in ihren Eigenfrequenzen auf die zu tilgenden Radschwingungen abgestimmt. Die Zwischenlagen aus Dämpfungsmaterial dämpfen die Schwingungen der einzelnen Platten. Aufgrund der Abstimmung der einzelnen Platten auf die Eigenfrequenzen des Rades ergibt sich zwar eine wirksamere Schwingungsdämpfung als bei anderen bekannten Methoden der Schwingungsdämpfung von Schienenrädern (z. B. Wellenableiter). Diese Methoden wirken zwar breitbandiger, dafür aber bei den zu dämpfenden Eigenfrequenzen der Räder weniger stark. Doch auch die Dämpfungswirkung der oben beschriebenen Schwingungsabsorber für Resonanzschwingungen von Schienenräder befriedigte noch nicht vollkommen.

Der Erfindung liegt die Aufgabe zugrunde, einen Schwingungsabsorber für Resonanzschwingungen rotierender Körper zu schaffen, der die maßgebenden Resonanzschwingungen der rotierenden Körper wirksam dämpft.

Diese Aufgabe wird erfindungsgemäß dadurch gelöst, daß die einzelnen Platten und die einzelnen Zwischenlagen bezüglich ihrer geometrischen Abmessungen und das Dämpfungsmaterial der Zwischenlagen bezüglich seiner Shore-Härte derart aufeinander abgestimmt sind, daß sämtliche Platten mit der zu dämpfenden Resonanzfrequenz des rotierenden Körpers schwingen und die Amplituden und die Phasen der Schwingungen der einzelnen Platten so zueinander liegen, daß die einzelnen Platten gegeneinander schwingen und dabei das Dämpfungsmaterial der Zwischenlagen komprimieren und entspannen.

Der Erfindung liegt die Erkenntnis zugrunde, daß es zur Dämpfung der Eigenschwingungen rotierender Körper in vielen Fällen nicht notwendig ist, alle Eigenschwingungen zu dämpfen, sondern oft nur eine Eigenschwingung, die z. B. bei der Schallabstrahlung dominiert. Dies ist z. B. bei Schienenräder für den Nahverkehr die Grundschwingung für axiale Biegeschwingungen des Rades mit vier Knoten bzw. vier Schwingungsbäuchen am Radumfang. Gerade diese Schwingform trägt am meisten zu den Kurvenkreischgeräuschen der Schienenräder im Nahverkehr bei. Dies kann aber auch z. B. die Grundschwingung der Räder in radialer Richtung sein. Diese Schwingform bestimmt weitgehend das Rollgeräusch der Räder für den Schnellverkehr. Diese Eigenschwingung muß dann jedoch sehr intensiv gedämpft werden. Dies wird erfindungsgemäß dadurch erreicht, daß die einzelnen Platten des Resonanzabsorbers mit derselben Frequenz schwingen, jedoch mit unterschiedlicher Phase und unterschiedlicher Amplitude, also gegeneinander, schwingen, so daß das Dämpfungsmaterial stark verformt wird und dadurch dem rotierenden Körper irreversibel Schwingungsenergie entzogen wird. Außerdem schwingen die Zungen gegenphasig zu dem zu dämpfenden Körper und bauen über die Dämpfungsmasse, die ja zugleich auch als Feder der Resonanzabsorber wirkt, Gegenkräfte gegen die die Schwingung verursachenden Erregerkräfte auf. Die Abstimmung auf die im allgemeinen scharf ausgeprägte Resonanzfrequenz des rotierenden Körpers ist unkritisch, da der Schwingungsabsorber eine breitbandige Resonanzstelle hat. Das bedeutet auch, daß eine durch Abnutzung bedingte, geringfügige Verschiebung der Resonanzfrequenz des rotierenden Körpers, die bei Schienenrädern im Bereich von einigen Prozent liegen kann, ebenfalls unkritisch ist. Die wirksame Dämpfung bleibt erhalten.

Während bei Resonanzabsorbern mit auf verschiedene Eigenfrequenzen (Grundschwingung — Oberschwingungen) des Schienenrades abgestimmte Platten Schwebungen auftreten, so daß die Dämpfungswirkung über die Zeit schwankt, kommt es bei der Erfindung nicht zu solchen Schwebungen, so daß die Dämpfungswirkung über die Zeit konstant ist.

Die Ankopplung des Schwingungsabsorbers an den rotierenden Körper ist besonders einfach, wenn er auf einer als Montage- und Trägerplatte ausgebildeten Platte befestigt ist. Da in diesem Falle die Montage- und Trägerplatte funktionell Teil des rotierenden Körpers ist, ist die großflächig ankoppelnde Zwischenlage zwischen der Trägerplatte und der benachbarten schwingungsfähigen Platte vorgesehen.

Besonders gute Ergebnisse hat man mit einem Schwingungsabsorber erzielt, bei dem sich die Zwischenlagen über die gesamte Plattenlänge bis auf einen kurzen, freien Endabschnitt einer jeden Platte erstrecken.

In der Praxis haben sich Schwingungsabsorber bewährt, bei denen die Härte des Dämpfungsmaterials zwischen 1 bis 30 Shore und die Schichtdicke jeweils zwischen 1 bis 5 mm bei einer Plattenlänge von 100 bis 600 mm und einer Plattenbreite von 5 bis 100 mm sowie einer Plattendicke von 1 bis 5 mm liegen. Als Plattenmaterial eignet sich vor allem Stahl.

Im folgenden wird die Erfindung anhand einer Zeichnung näher erläutert. Im einzelnen zeigt

Fig. 1 einen etwa im mittleren Bereich an einem rotierenden Körper starr befestigten Schwingungsabsorber in Seitenansicht,

Fig. 2 einen Schwingungsabsorber in Seitenansicht, der an seinen beiden Enden an einem rotierenden Körper starr befestigt ist,

Fig. 3 einen dem Ausführungsbeispiel der Fig. 1 ähnlichen Schwingungsabsorber, der auf einer Träger- und Montageplatte aufgebaut ist, in isometrischer Darstellung,

Fig. 4 und 5 das Schwingungsverhalten des Schwingungsabsorbers gemäß Fig. 3, und zwar bezüglich der Amplitude und der Phasenlage,

Fig. 6 einen in einer Hohlwelle eingebauten Schwingungsabsorber für Biegeschwingungen,

Fig. 7 einen in einer Hohlwelle eingebauten Schwingungsabsorber für radiale Schwingungen,

Fig. 8 drei an einer Welle angebaute Schwingungsabsorber für Torsionsschwingungen,

Fig. 9 einen Schwingungsabsorber für Schienenträger in Seitenansicht,

Fig. 10 ein Schienenrad im Ausschnitt und Seitenansicht mit Schwingungsabsorbern gemäß Fig. 9 und

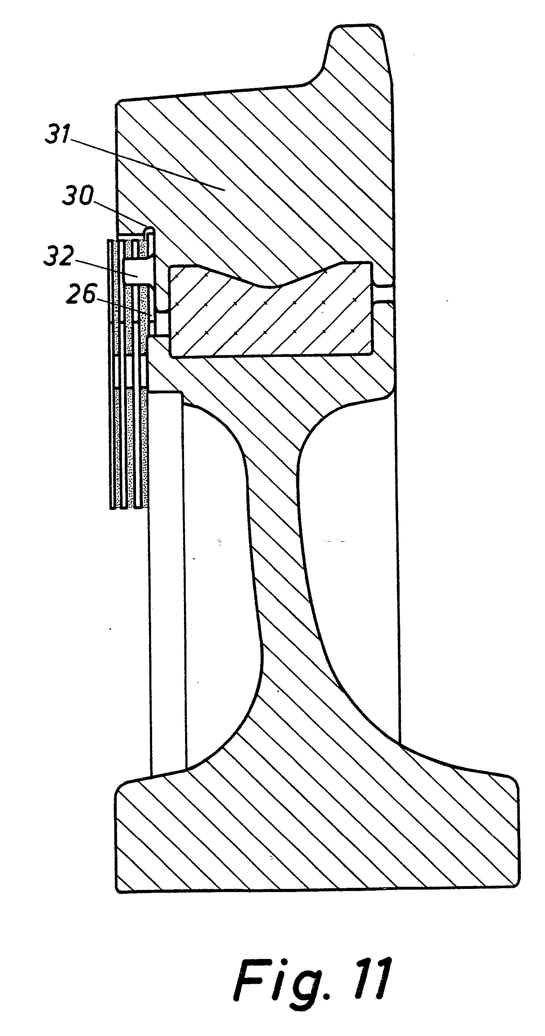

Fig. 11 das Schienenrad gemäß Fig. 10 im Axialschnitt.

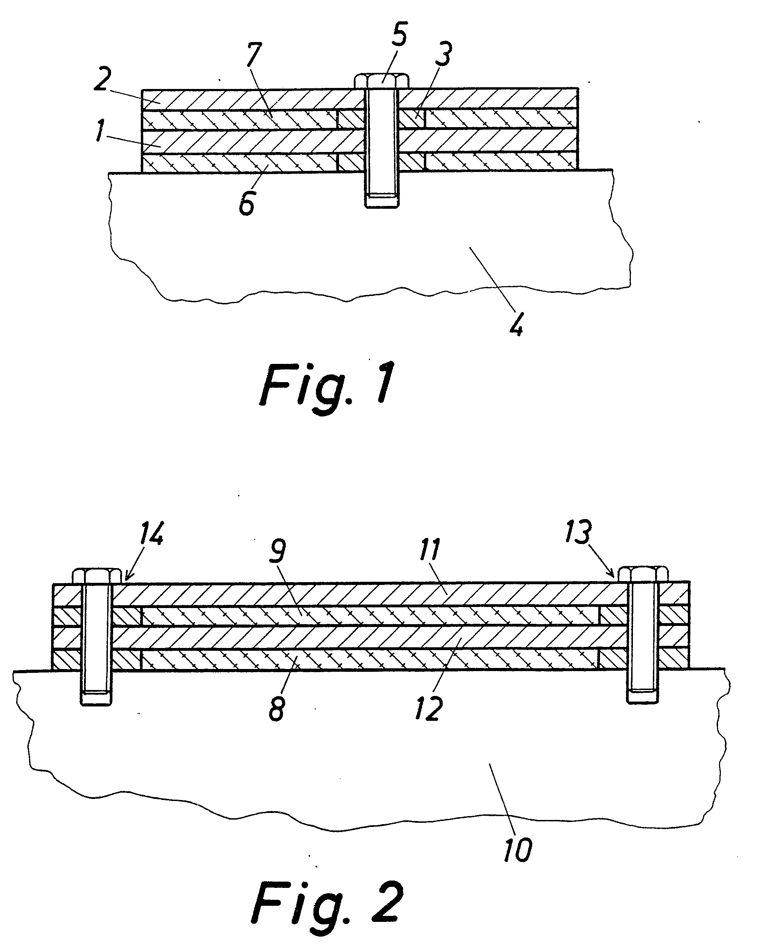

Der in Fig. 1 dargestellte Schwingungsabsorber besteht aus zwei quaderförmigen, flachen Metallplatten 1, 2, die etwas außerhalb ihrer Mitte über einen Block 3, der aus den Platten 1 und 2 und Unterlegscheiben aufgebaut sein kann, an einem rotierenden Körper mittels eines Schraubenbolzens 5 befestigt sind. Zwischen den Platten 1, 2 und dem rotierenden Körper 4 befinden sich Zwischenlagen 6, 7 aus einem elastischen Dämpfungsmaterial. Bei einem solchen Schwingungsabsorber ist der Schwingungsknoten durch die starre Befestigung 3, 5 am rotierenden Körper 4 festgelegt. Die Platten 1, 2 können, wie die Zungen einer Stimmgabel, schwingen, wobei diese Schwingungen durch das Dämpfungsmaterial gedämpft werden. Aufgrund der großflächigen Ankopplung an den rotierenden Körper erfaßt der Schwingungsabsorber auch über den rotierenden Körper wandernde Schwingungen.

Das Ausführungsbeispiel der Fig. 2 unterscheidet sich von dem der Fig. 1 nur dadurch, daß die durch Zwischenlagen 8, 9 voneinander und vom rotierenden Körper 10 getrennten schwingungsfähigen Platten 11, 12 an beiden Enden über Befestigungselemente 13, 14 starr am rotierenden Körper 10 befestigt sind.

Neben diesen beiden Ausführungsbeispielen besteht ferner die Möglichkeit, die einzelnen Platten nur an einem Ende starr mit dem rotierenden Körper zu verbinden.

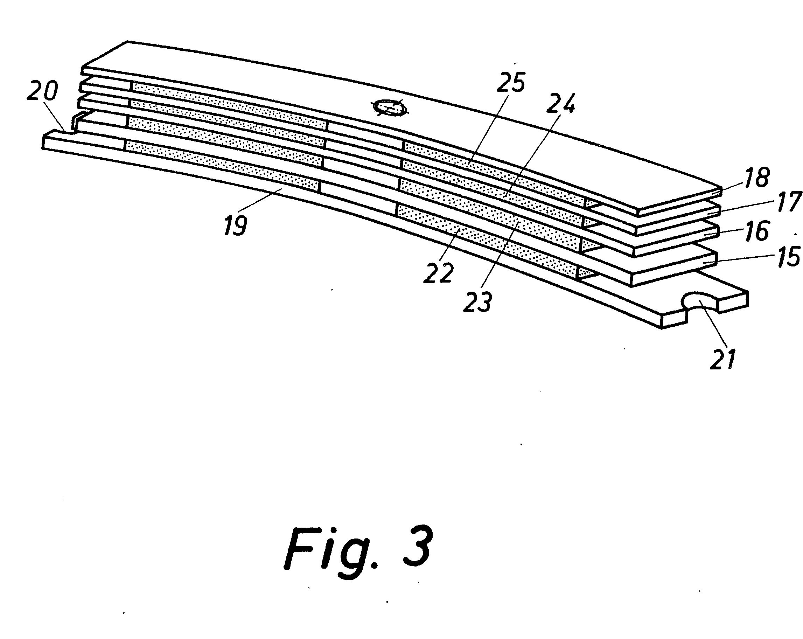

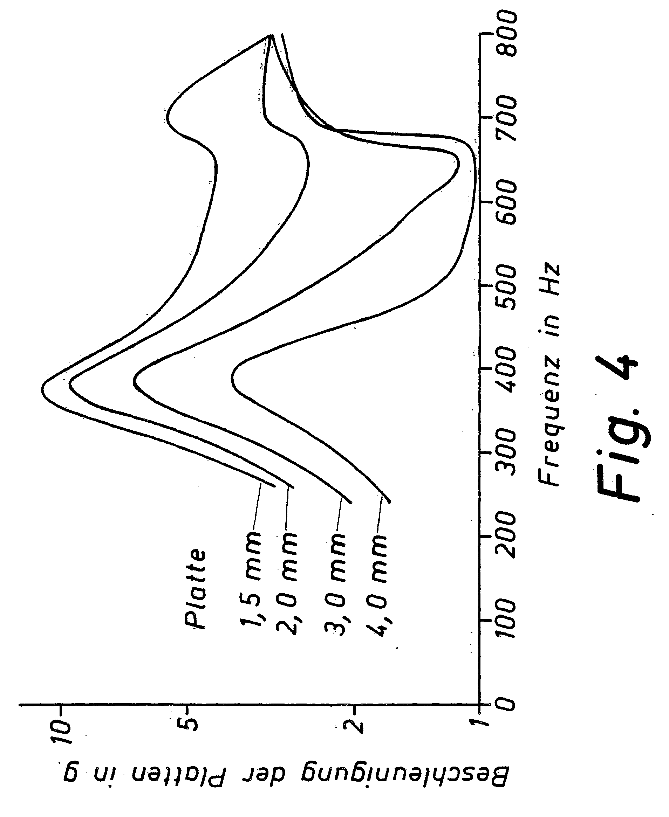

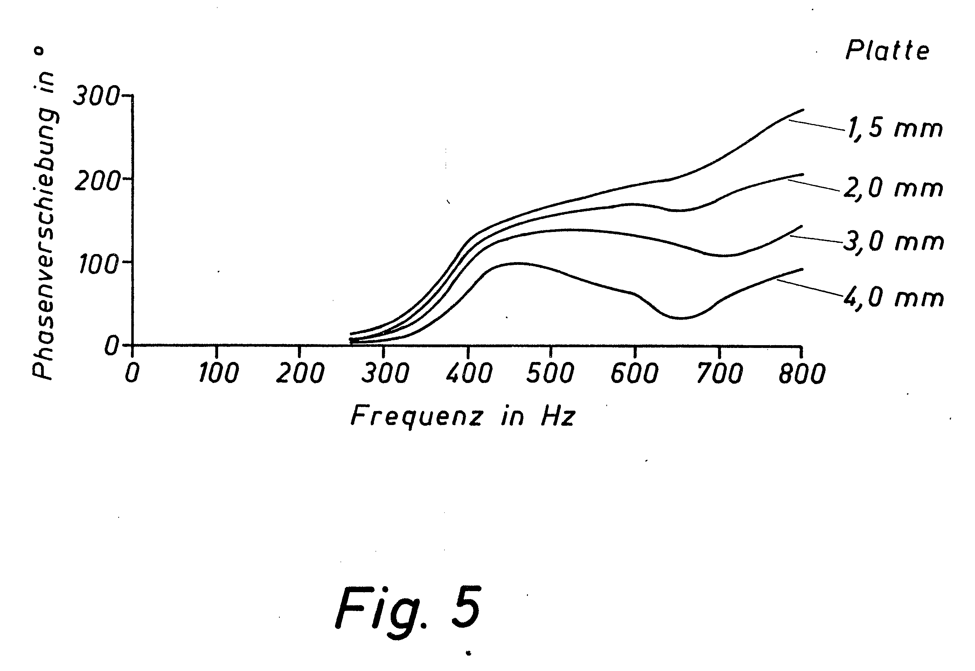

Die wesentlichen Unterschiede des Ausführungsbeispiels der Fig. 3 zum Ausführungsbeispiel der Fig. 1 bestehen darin, daß die mittig starr miteinander verbundenen Platten 15, 16, 17, 18 starr auf einer Träger- und Montageplatte 19 mit endseitig überstehenden Ohren 20, 21 befestigt sind, wobei die Zwischenlagen 22, 23, 24, 25 nicht bis zu den Plattenenden durchgehen. Die Platten 15—19 bestehen aus Stahl. Die Länge der Platten 15—18 außerhalb der Einspannstelle beträgt 90 mm, die Breite beträgt 30 mm und die Dicke der Platten 15—18, ausgehend von der Platte 15, betragen 4, 3, 2, 1,5 mm. Die Zwischenlagen erstrecken sich über eine Länge von 75 mm und über die gesamte Plattenbreite. Das elastische Dämpfungsmaterial hat eine Härte von 3 Shore.

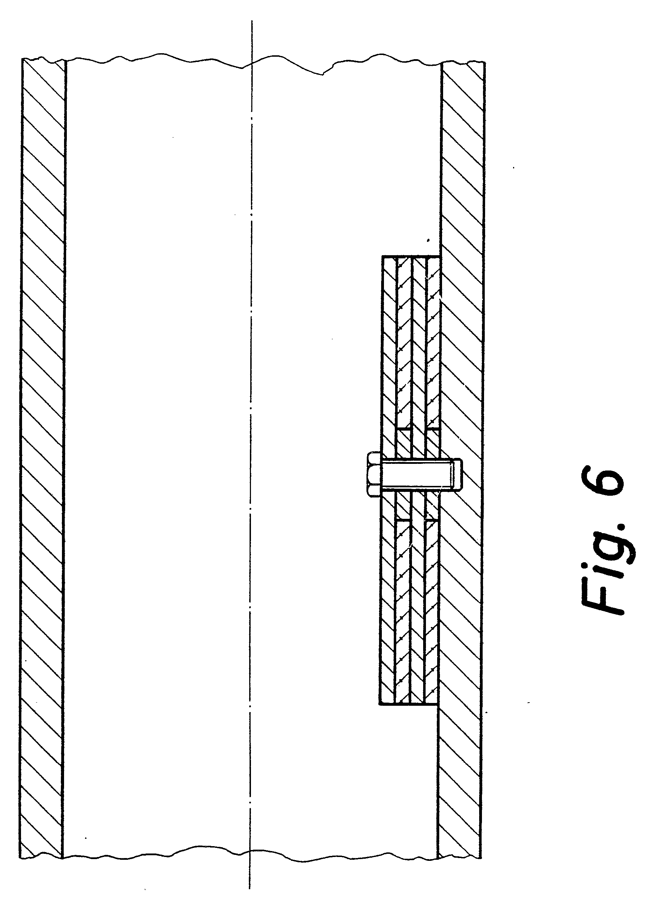

Für eine derartig aufgebaute Platte ergibt sich ein Schwingungsverhalten, wie es in Fig. 4 und 5 dargestellt ist. Fig. 4 zeigt, daß trotz unterschiedlicher Plattendicke sämtliche Platten im wesentlichen mit ein und derselben Resonanzfrequenz von etwas weniger als 400 Hz schwingen. Die Amplitude der einzelnen Platten ist unterschiedlich. Aus Fig. 5 ergibt sich darüber hinaus, daß die Phasenlage der Schwingungen der einzelnen Platten ebenfalls unterschiedlich ist. Aufgrund dieser beiden Unterschiede schwingen die einzelnen Platten gegeneinander, was eine starke Verformung der dämpfenden Zwischenschicht zur Folge hat. Es versteht sich, daß die Unterschiede in der Amplitude und der Phasenlage möglichst groß sein sollen, um eine optimale Dämpfungswirkung zu erreichen.

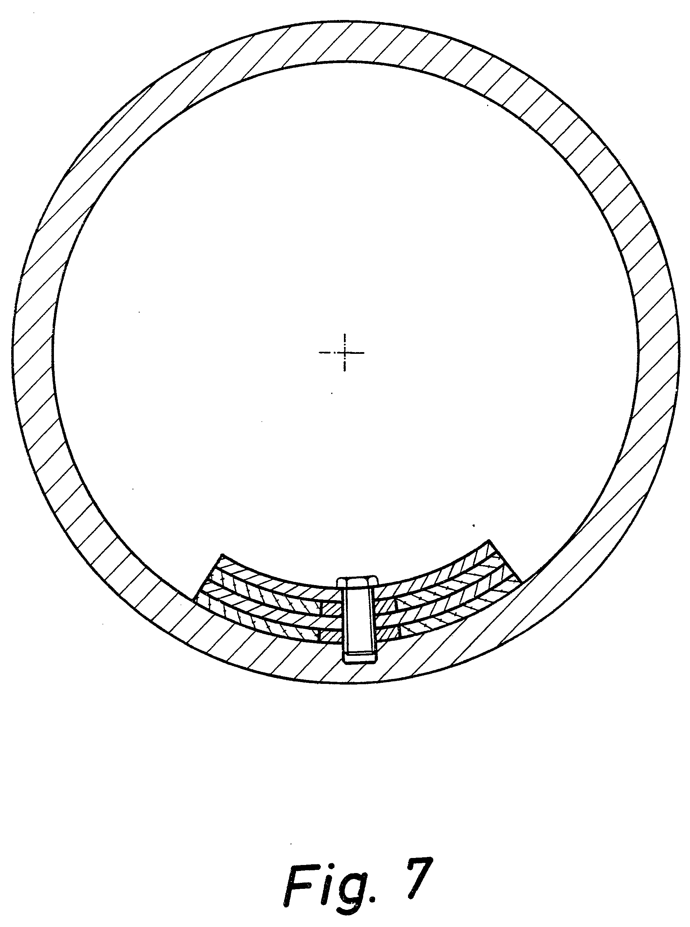

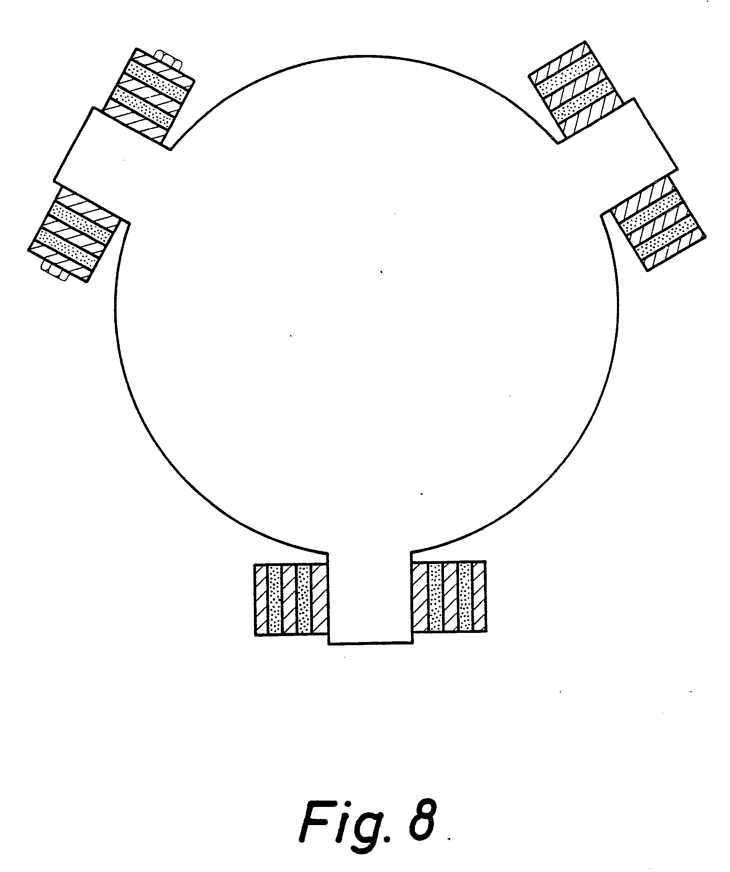

Die Schwingungsabsorber der Ausführungsbeispiele der Fig. 6 und 7 entsprechen dem der Fig. 1, wobei allerdings die Platten und die Zwischenlagen der Krümmung des rotierenden Körpers angepaßt sind. Beim Ausführungsbeispiel der Fig. 6 erstrecken sich die Platten in Längsrichtung der Hohlwelle, so daß sie bevorzugt Biegeschwingungen dämpfen, während sie sich beim Ausführungsbeispiel der Fig. 7 in Umfangsrichtung erstrecken und deshalb vorzugsweise Radialschwingungen dämpfen. Beim Ausführungsbeispiel der Fig. 8 sind die Platten so orientiert, daß sie die Torsionsschwingungen der Welle dämpfen können.

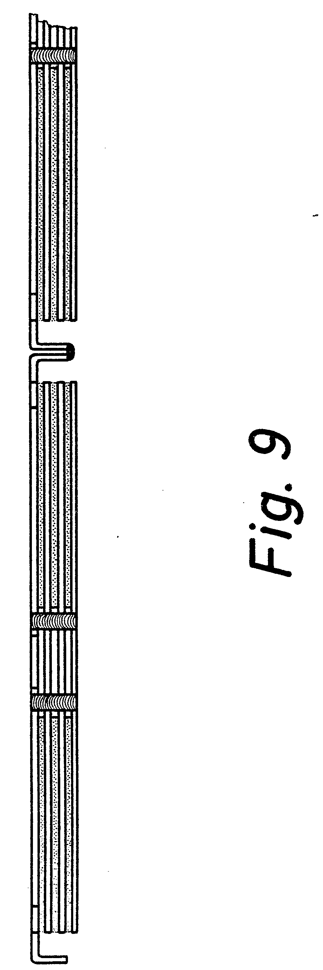

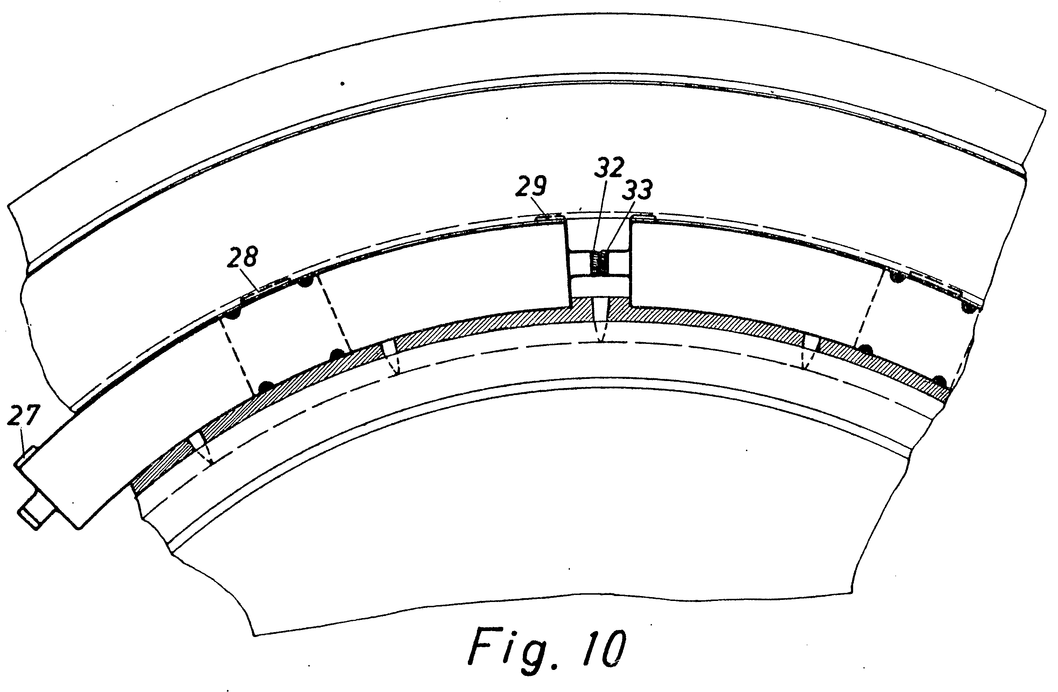

Der Schwingungsabsorber gemäß dem Ausführungsbeispiel der Fig. 9 stimmt weitgehend mit dem Schwingungsabsorber des Ausführungsbeispiels der Fig. 3 überein. Dieses Ausführungsbeispiel hat aber eine spezielle Formgebung, um auf einfache Art und Weise an einem Schienenrad befestigt werden zu können. Wie Fig. 10 zeigt, sind die einzelnen Platten in Längsrichtung leicht gekrümmt. Ihre Montage- und Trägerplatten 26 weisen in der Mitte und an jedem Ende radial nach außen gerichtete Nasen 27, 28, 29 auf, mit denen sie in eine Ausdrehung 30 des Radreifens 31 eingreifen. In Umfangsrichtung des Rades sind mehrere derart ausgebildete Schwingungsabsorber angeordnet. Benachbarte Schwingungsabsorber stoßen mit an ihren Enden angeordneten Laschen 32, 33 der Trägerplatten 26 aneinander. Die aneinanderstoßenden Laschen 32, 33 sind miteinander verschweißt, so daß die Schwingungsabsorber einen geschlossenen Ring bilden. Die Trägerplatten sind an den Stirnseiten radial nach innen weisender Ringflächen angeklebt. Geht die Klebeverbindung verloren, werden die Schwingungsabsorber durch ihre nach außen gerichteten Nasen 27 bis 29 gehalten.

Um verschiedene Frequenzen des Rades zu dämpfen, ist jeder Schwingungsabsorber auf eine bestimmte Frequenz abgestimmt. Im Unterschied zu den bekannten Schwingungsabsorbern, wo die einzelnen Zungen auf die verschiedenen Frequenzen des Rades abgestimmt sind, erhält man durch die erfindungsgemäßen Schwingungsabsorber eine wesentlich bessere Dämpfung der Schwingung.

## Patentansprüche

1. Schwingungsabsorber für Resonanzschwingungen rotierender Körper (4, 10), insbesondere Schienenräder, bestehend aus mehreren, die Masse bildenden oder tragenden, voneinander durch Zwischenlagen aus Dämpfungsmaterial (7, 9, 23 – 25) getrennten, schwingungsfähigen Platten (1, 2, 11, 12, 15 – 18), die an mindestens einer Stelle starr mit dem rotierenden Körper verbunden und im übrigen Bereich über eine Zwischenlage aus Dämpfungsmaterial (6, 8, 22) großflächig an dem rotierenden Körper angekoppelt sind, dadurch gekennzeichnet, daß die einzelnen Platten (1, 2, 11, 12, 15 – 18) und die einzelnen Zwischenlagen (6, 7, 8, 9, 22 – 25) bezüglich ihrer geometrischen Abmessungen und das Dämpfungsmaterial der Zwischenlagen (6 – 9, 22 – 25) bezüglich seiner Shore-Härte derart aufeinander abgestimmt sind, daß sämtliche Platten (1, 2, 11, 12, 15 – 18) mit der zu dämpfenden Resonanzfrequenz des rotierenden Körpers (4, 10) schwingen und die Amplituden und die Phasen der Schwingungen der einzelnen Platten (1, 2, 11, 12, 15 – 18) so zueinander liegen, daß die einzelnen Platten (1, 2, 11, 12, 15 – 18) gegeneinander schwingen und dabei das Dämpfungsmaterial der Zwischenlagen (6 – 9, 22 – 25) komprimieren und entspannen.

2. Schwingungsabsorber nach Anspruch 1, dadurch gekennzeichnet, daß der Schwingungsabsorber auf einer als Montage- und Trägerplatte ausgebildeten Platte (19) befestigt ist.

3. Schwingungsabsorber nach Anspruch 1 oder 2, dadurch gekennzeichnet, daß jede Zwischenlage (22 – 25) sich über die gesamte Plattenlänge bis auf einen kurzen freien Endabschnitt einer jeden Platte (15 – 18) erstreckt.

4. Schwingungsabsorber nach einem der Ansprüche 1 bis 3, dadurch gekennzeichnet, daß die Härte des Dämpfungsmaterials der Zwischenlagen (6, 7, 8, 9, 22 – 25) 1 bis 30 Shore und die Dicke der Zwischenlagen jeweils 1 bis 5 mm bei einer Plattenlänge von 100 bis 600 mm und einer Plattenbreite von 5 bis 100 mm und einer Plattendicke von 1 bis 5 mm betragen.

5. Schwingungsabsorber nach einem der Ansprüche 1 bis 4, dadurch gekennzeichnet, daß die schwingungsfähigen Platten (15 – 18) aus Metall, insbesondere aus Stahl, bestehen.

## Claims

1. Vibration absorber for resonant vibrations of rotating bodies (4, 10), in particular rail wheels, consisting of a plurality of oscillatory plates (1, 2, 11, 12, 15 – 18) which form or bear the mass, separated from one another by intermediate layers of damping material (7, 9, 23 – 25), and rigidly connected at at least one point to the rotating body and in the remaining region are extensively coupled via an intermediate layer of damping material (6, 8, 22) to the rotating body, characterized in that the individual plates (1, 2, 11, 12, 15 – 18) and the individual intermediate layers (6, 7, 8, 9, 22 – 25) — with respect to their geometric dimensions — and the damping material of the intermediate layers (6 – 9, 22 – 25) — with respect to its Shore hardness — are adapted to one another such that all the plates (1, 2, 11, 12, 15 – 18) vibrate with the resonant frequency, of the rotating body (4, 10), which is to be dampened and the relation between the amplitudes and the phases of the vibrations of the individual plates (1, 2, 11, 12, 15 – 18) is such that the individual plates (1, 2, 11, 12, 15 – 18) vibrate against each other and compress and un-tension the damping material of the intermediate layers (6 – 9, 22 – 25).

2. Vibration absorber according to claim 1, characterized in that the vibration absorber is secured on a plate (19) which is formed as a mounting and support plate.

3. Vibration absorber according to claim 1 or 2, characterized in that each intermediate layer (22 – 25) extends over the entire length of the plates to a short free end section of each of the plates (15 – 18).

4. Vibration absorber according to one of claims 1 to 3, characterized in that the hardness of the damping material of the intermediate layers (6, 7, 8, 9, 22 – 25) is 1 to 30 Shore and the thickness of the intermediate layers in each case is 1 to 5 mm in the case of a plate length of between 100 and 600 mm, a plate width of 5 to 100 mm and a plate thickness of 1 to 5 mm.

5. Vibration absorber according to one of claims 1 to 4, characterized in that the oscillatory plates (15 – 18) are made of metal, in particular steel.

## Revendications

1. Amortisseur de vibrations pour vibrations de résonance de pièces en rotation (4, 10), en particulier de roues pour voie ferrée, comportant plusieurs lames (1, 2, 11, 12, 15 – 18), qui constituent ou portent la masse de l'amortisseur, sont séparées l'une de l'autre par des fourrures en matériau amortisseur (7, 9, 23 – 25), peuvent entrer en vibration, sont au moins à un endroit, rigidement reliées à la pièce en rotation et, par ailleurs, sont couplées sur une grande surface aux pièces en rotation par l'intermédiaire d'une fourrure de matériau amortisseur (6, 8, 22), caractérisé en ce que les différentes lames (1, 2, 11, 12, 15 – 18) et les différentes fourrures (6 – 9, 22 – 25), du point de vue de leurs dimensions géométriques, et le matériau amortisseur des fourrures (6 – 9, 22 – 25), du point de vue de sa dureté shore sont harmonisées l'une à l'autre de façon que toutes les lames (1, 2, 11, 12, 15 – 18) vibrent à la fréquence de résonance, qu'il faut amortir, de la pièce en rotation (4, 10) et que les amplitudes et les phases des vibrations des différentes lames (1, 2, 11, 12, 15 – 18) soient disposées l'une par rapport à l'autre de façon que les différentes lames (1, 2, 11, 12, 15 – 18) vibrent l'une par rapport à l'autre, en comprimant et détendant le matériau amortisseur des fourrures (6 – 9, 22 – 25).

2. Amortisseur de vibration selon la revendication 1, caractérisé en ce que l'amortisseur de vibration est fixé sur une lame (19) conçue comme lame de montage et d'appui.

3. Amortisseur de vibration selon la revendication 1 ou la revendication, caractérisé en ce que chaque fourrure (22 – 25) s'étend sur la totalité de la longueur des lames à l'exception d'un court tronçon libre d'extrémité de chaque lame (15 – 18).

4. Amortisseur de vibration selon l'une des revendications 1 à 3, caractérisé en ce que les duretés du matériau amortisseur des fourrures (6, 7, 8, 9, 22 – 25) atteignent 1 à 30 shore et l'épaisseur des fourrures atteint respectivement 1 à 5 mm pour une longueur de lame de 100 à 600 mm et une largeur de lame de 5 à 100 mm et une épaisseur de lame de 1 à 5 mm.

5. Amortisseur de vibration selon l'une des revendications 1 à 4, caractérisé en ce que les lames (15 – 18), qui peuvent entrer en vibration, sont en métal, en particulier en acier.

Fig. 1

Fig. 2

*Fig. 3*

0 020 284

Fig. 4

Fig. 5

Fig. 6

Fig. 7

*Fig. 8*

Fig. 9

Fig. 10

0 020 284

*Fig. 11*